# EUROPÄISCHE PATENTANMELDUNG

(11) **EP 4 328 477 A1**
(43) Veröffentlichungstag der Anmeldung: **28.02.2024**
(21) Anmeldenummer: 23192436.6
(22) Anmeldetag: 21.08.2023
(51) Int. Cl.: F16L 55/165, B29C 63/36, F16L 55/179, F16L 55/18

(54) **VORRICHTUNG, IHRE VERWENDUNG, VERFAHREN ZUM APPLIZIEREN EINES SCHLAUCHLINERS, SCHLAUCHMANSCHETTE, SOWIE KANALSANIERUNGSSYSTEM**

(30) Priorität: 22.08.2022 DE 102022121168
(71) Anmelder: Lisnik, Alex, 21220 Seevetal (DE)
(72) Erfinder: Lisnik, Alex, 21220 Seevetal (DE)
(74) Vertreter: Glawe, Delfs, Moll

(57) **Zusammenfassung**

Offenbart wird eine Vorrichtung (10) zum Applizieren, von einem Hauptkanal (2) aus, eines Schlauchliners (20) in einen von dem Hauptkanal (2) abgehenden Nebenkanal (3), insbesondere einen Entwässerungskanal, umfassend eine sich entlang einer axialen Richtung (x) und einer senkrecht zur axialen Richtung (x) verlaufenden Querrichtung (r) erstreckende Behälteranordnung (100), die ein Behälterelement (110) zur Aufnahme des Schlauchliners (20) und einen an einem axialen Ende des Behälterelements (110) angeordneten Stutzen (120) aufweist, wobei der Stutzen (120) eine in Querrichtung (r) weisende Auslassöffnung (124) zur Ausgabe des im Behälterelement (110) aufgenommenen Schlauchliners (20) und einen Befestigungsbereich (122) zur Befestigung eines ersten Endbereichs (22) des Schlauchliners (20) aufweist, sodass der in einem zweiten Endbereich (26) verschlossene Schlauchliner (20) bei Druckbeaufschlagung der Behälteranordnung (100) in Querrichtung (r) ausgegeben wird, wobei eine Schlauchmanschette (230) zur Ummantelung und Fixierung einer Stützschicht (210) des Schlauchliners (20) in einem an den ersten Endbereich (22) angrenzenden Bereich vorgesehen ist, sowie ein Kanalsanierungssystem umfassend eine solche Vorrichtung, eine entsprechende Verwendung, ein entsprechendes Verfahren und eine entsprechende Schlauchmanschette.

## Beschreibung

Die vorliegende Erfindung betrifft eine Vorrichtung zum Applizieren, von einem Hauptkanal aus, eines Schlauchliners in einen von dem Hauptkanal abgehenden Nebenkanal, insbesondere einen Entwässerungskanal, ein Kanalsanierungssystem umfassend eine solche Vorrichtung sowie eine entsprechende Verwendung und ein entsprechendes Verfahren.

Bei der Sanierung von unterirdischen Kanälen zur Entwässerung stellt sich regelmäßig das Problem eines zur Durchführung der Sanierung geeigneten Zugangs zum Kanal. Insbesondere bei Nebenkanälen wie Hausanschlusskanälen ist dies der Fall, die typischerweise zu dem mit dem Haus verbundenen Teil in Privateigentum und zu dem mit einem Hauptkanal verbundenen Teil in kommunaler Hand sind. Ist ein Zugang zu dem Nebenkanal nur in einem dieser Teile möglich, soll aber nur der andere Teil saniert werden, gestaltet sich dies regelmäßig problematisch. Insbesondere bei einer von kommunaler Seite vorzunehmenden Sanierung ist daher ein Zugang von kommunalem Gebiet, und somit üblicherweise vom Hauptkanal aus, wünschenswert.

Zur Verbesserung der Strömungsverhältnisse mündet ein Hausanschlusskanal jedoch regelmäßig nicht senkrecht in einen Hauptkanal ein, sondern abgeschrägt in Richtung der Fließrichtung des Hauptkanals, sodass der Hausanschlusskanal mit dem Hauptkanal entgegen dessen Fließrichtung einen spitzen Winkel und in dessen Fließrichtung einen stumpfen Winkel einschließt. Dabei kann eine Sanierung des Hausanschlusskanals aufgrund der beschränkten Platzverhältnisse im Hauptkanal im Bereich der Einmündung des Nebenkanals üblicherweise nur über den stumpfen Winkel erfolgen. Das bedeutet, dass ein zur Durchführung der Sanierung geeigneter Zugang über den Hauptkanal nur entgegen dessen Fließrichtung erlangt werden kann. Diese Abhängigkeit von der Fließrichtung schränkt die Zugangsmöglichkeiten bei einer von einem Hauptkanal ausgehenden Sanierung des Hausanschlusskanals jedoch erheblich ein.

Eine Aufgabe der vorliegenden Erfindung ist es deshalb, vor dem Hintergrund der vorstehend genannten Probleme eine verbesserte Vorrichtung bereitzustellen, die insbesondere eine fließrichtungsunabhängige und damit vereinfachte und effizientere Sanierung von Kanälen, vor allem von Hausanschlusskanälen ermöglicht.

Die erfindungsmäße Lösung liegt in den Merkmalen der unabhängigen Ansprüche. Vorteilhafte Weiterbildungen sind Gegenstand der abhängigen Ansprüche.

Gemäß der Erfindung wird eine Vorrichtung zum Applizieren, von einem Hauptkanal aus, eines Schlauchliners in einen von dem Hauptkanal abgehenden Nebenkanal, insbesondere einen Entwässerungskanal, offenbart, umfassend eine sich entlang einer axialen Richtung und einer senkrecht zur axialen Richtung verlaufenden Querrichtung erstreckende Behälteranordnung, die ein Behälterelement zur Aufnahme des Schlauchliners und einen an einem axialen Ende des Behälterelements angeordneten Stutzen aufweist, wobei der Stutzen eine in Querrichtung weisende Auslassöffnung zur Ausgabe des im Behälterelement aufgenommenen Schlauchliners und einen Befestigungsbereich zur Befestigung eines ersten Endbereichs des Schlauchliners aufweist, sodass der in einem zweiten Endbereich verschlossene Schlauchliner bei Druckbeaufschlagung der Behälteranordnung in Querrichtung ausgegeben wird.

Bei der erfindungsgemäßen Vorrichtung handelt es sich beispielsweise um eine Schlauchliningvorrichtung zum fließrichtungsunabhängigen Applizieren eines Schlauchliners in einen von einem Hauptkanal abgehenden Hausanschlusskanal von dem Hauptkanal aus.

Nachfolgend seien zunächst einige im Zusammenhang mit der Erfindung verwendete Begriffe erläutert:
Unter dem Applizieren des Schlauchliners soll die, insbesondere inversierte, Ausgabe und das anschließende Aushärten des Schlauchliners in dem Nebenkanal verstanden werden.

Als Kanal wird vorliegend ein Entwässerungskanal, insbesondere ein Abwasserkanal, bezeichnet, wobei unter einem Hauptkanal beispielsweise ein Kanal einer Ortskanalisation verstanden werden soll, in den mehrere Nebenkanäle, zum Beispiel Hausanschlusskanäle, zur Abwasserentwässerung von Häusern einmünden. Insbesondere weisen solche Kanäle typischerweise eine definierte Fließrichtung auf. Für einen Hauptkanal ist üblicherweise ein Durchmesser aus einem Bereich von 20 cm (DN 200) bis 30 cm (DN 300) vorgesehen. Bei einem Nebenkanal sind Durchmesser aus einem Bereich von 10 cm (DN 100) bis 15 cm (DN 150) üblich.

Die Behälteranordnung erstreckt sich entlang ihrer Länge in einer axialen Richtung und senkrecht zur axialen Richtung in einer Querrichtung. Die Behälteranordnung stellt mit Ausnahme der Auslassöffnung des Stutzens einen im Wesentlichen geschlossenen Innenraum bereit, wobei der Schlauchliner in ein oder mehrere Behälterelemente der Behälteranordnung aufgenommen werden kann. Die Behälteranordnung kann modular aufgebaut sein, und beispielsweise mehrere, zum Beispiel zwei oder drei, Behälterelemente aufweisen. So ist denkbar, dass die Behälteranordnung, beispielsweise im Falle eines besonders langen auszugebenden Schlauchliners, jeweils paarweise aneinander angrenzend angeordnete Behälterelemente umfasst, in denen jeweils ein Teil des Schlauchliners aufgenommen ist, wobei die Behälterelemente einen gemeinsamen Innenraum aufweisen. Der Stutzen kann an einem der mehreren Behälterelemente angeordnet sein. Vorzugsweise umfasst die Behälteranordnung eine Einrichtung zur Erfassung eines Innendrucks in der Behälteranordnung.

Das Behälterelement ist zur Aufnahme des, beispielsweise gefalteten oder gerollten, Schlauchliners ausgebildet. Um eine möglichst gleichmäßige Ausgabe des Schlauchliners bei Druckbeaufschlagung der Behälteranordnung zu ermöglichen, kann die Innenwand des Behälterelements reibungsarm, kanten- und/oder stufenlos gestaltet sein. Beispielsweise handelt es sich bei dem Behälterelement um ein Kunststoffrohr oder um ein Metallrohr.

Der Stutzen kann als Teil des Behälterelements ausgeformt sein, kann aber insbesondere auch als eine gesonderte Komponente der Behälteranordnung ausgebildet sein, die an einer geeigneten Öffnung des Behälterelements befestigt ist. Im letzteren Fall kann der Stutzen aus dem gleichen Material ausgebildet sein wie das Behälterelement. Beispielsweise ist der Stutzen trichterförmig ausgebildet, wobei der Ausgang des Trichterhalses die Auslassöffnung bildet. Entsprechend kann bei einer gesonderten Ausbildung eines solchen Stutzens die Trichteröffnung an einer Öffnung des Behälterelements befestigt sein, wobei Trichteröffnung und Öffnung des Behälterelements zueinander passgenau ausgestaltet sein können. Beispielhaft handelt es sich bei dem Stutzen um einen trichterförmigen Rohrstutzen, dessen Trichteröffnung an einer offenen Stirnseite eines als zylindrischem Rohr ausgebildeten Behälterelements befestigt ist. Der Stutzen umfasst eine in Querrichtung weisende Auslassöffnung. Entsprechend kann der Stutzens als ein 90°-Rohrbogen ausgebildet sein.

Beispielsweise ist die Auslassöffnung rund ausgebildet. Um eine möglichst zielgerichtete Ausgabe des Schlauchliners zu ermöglichen, kann die Auslassöffnung einen geringeren Querschnitt aufweisen als der Querschnitt der Innenseite des Behälterelements in Querrichtung. Beispielsweise beträgt der Durchmesser einer runden Auslassöffnung mindestens 70 mm, vorzugsweise mindestens 85 mm, und maximal 100 mm, vorzugsweise maximal 95 mm.

Als Befestigungsbereich des Stutzens kann die die Auslassöffnung umgebende Umwandung des Stutzens ausgebildet sein. Beispielsweise weist der Befestigungsbereich des Stutzens ausgehend von der Auslassöffnung eine Länge von mindestens 20 mm, vorzugsweise mindestens 60 mm, und maximal 120 mm, vorzugsweise maximal 80 mm, auf. Es kann des Weiteren vorgesehen sein, dass im Befestigungsbereich die Umwandung des Stutzens unmittelbar an der Auslassöffnung eine von der Auslassöffnung nach außen ragende Verdickung aufweist, um eine möglichst abrutschsichere Befestigung des ersten Endbereichs des Schlauchliners im Befestigungsbereich zu ermöglichen.

Bei dem Schlauchliner handelt es sich um einen schlauchförmig ausgestalteten Werkstoff, der nach erfolgter Applizierung die Innenwand des sanierten Nebenkanals bildet. Zum Beispiel umfasst der Schlauchliner dazu ein oder mehrere aushärtbare Linermaterialien, wie zum Beispiel duroplastische Kunstharze, beispielsweise ungesättigte Polyesterharze, Epoxidharze, Silikatharze oder Vinylesterharze, die beispielsweise die Normen DIN 18820-1 Tabelle 1 und/oder DIN 16946-2 erfüllen. Vorzugsweise ist der Schlauchliner mehrschichtig ausgestaltet. Der Schlauchliner kann eine Linerschicht als eine Innenschicht und eine Stützschicht als eine Außenschicht umfassen. Zum Beispiel sind die Schichten des Schlauchliners lose übereinander angeordnet und relativ zueinander bewegbar. Die Linerschicht ist beispielsweise als eine Harzmatrix und eine Trägerfaser ausgebildet. Die Stützschicht umfasst zum Beispiel Verstärkungsfasern und/oder Folien, und kann vorzugsweise als ein Stützschlauch oder ein Kalibrierschlauch ausgebildet sein. Nach erfolgter Applizierung des Rohrauskleidungsschlauchs kann die nun außenliegende Linerschicht des invertierten Schlauchliners die Innenwand des Nebenkanals bilden. Die nach erfolgter Applizierung innenliegende Stützschicht des invertierten Schlauchliners kann entfernbar sein. Vorzugsweise ist der Schlauchliner für den zu sanierenden Nebenkanal konfektioniert, zum Beispiel hinsichtlich Länge, Durchmesser und Wanddicke.

Ein Ende des Schlauchliners kann am Befestigungsbereich des Stutzens befestigt werden. Dazu kann ein erster Endbereich eines in dem Behälterelement der Behälteranordnung aufgenommenen Schlauchliners durch die Auslassöffnung geführt, umgekrempelt, über die Umwandung der Auslassöffnung gestülpt und an der Außenseite des Stutzens befestigt werden, zum Beispiel mit einem Auslassbefestigungselement, beispielsweise einer geeigneten Auslassmanschette. Wird der Schlauchliner am anderen Ende in einem zweiten Endbereich verschlossen, stellt der Schlauchliner einen Verschluss der Auslassöffnung dar, sodass bei Druckbeaufschlagung der ansonsten geschlossenen Behälteranordnung der in dem Behälterelement aufgenommene Schlauchliner aus der Auslassöffnung ausgegeben und seiner Schlauchform entsprechend expandiert wird. Der Schlauchliner wird somit inversiert, sodass nach erfolgter Ausgabe aus der Vorrichtung die Innenseite des Schlauchliners außen liegt und die Außenseite des Schlauchliners innen. Während der Ausgabe kann sich Schlauchliner in seinem Verlauf dem Verlauf des Nebenkanals, in den der Schlauchliner ausgegeben wird, anpassen. Indem die Behälteranordnung nach Ausgabe des Schlauchliners mit Heißdampf beaufschlagt wird, kann der Heißdampf an den in den zu sanierenden Nebenkanal ausgegebenen Schlauchliner gelangen, und so eine Aushärtung des Schlauchliners herbeiführen, ohne dass es eines direkten Zugriffs auf oder einer Manipulation des inversierten Schlauchliners bedarf. Somit ermöglicht die Vorrichtung eine besonders einfache und schnelle Applizierung des Schlauchliners, was zudem ohne umfangreiches Bedienpersonal erfolgen kann.

Der Stutzen umfasst eine in Querrichtung weisende Auslassöffnung, sodass eine Ausgabe des Schlauchliners aus der Auslassöffnung in Querrichtung erfolgen kann. Dies erlaubt eine Applizierung in einen Nebenkanal unabhängig von dessen Einmündungsrichtung in den Hauptkanal, sodass von dem Hauptkanal aus eine fließrichtungsunabhängige Applizierung in den Nebenkanal möglich ist. Darunter soll insbesondere verstanden werden, dass ein Positionieren und Ausrichten der Vorrichtung in einem eine spezifische Fließrichtung aufweisenden Hauptkanal unabhängig von der Fließrichtung erfolgen kann, und die Vorrichtung zur Durchführung der Applizierung insbesondere auch in Richtung der Fließrichtung durch den Hauptkanals verbracht werden kann. Da der Stutzen an einem axialen Ende des Behälterelements angeordnet ist, kann die Vorrichtung in dem Hauptkanal besonders einfach so positioniert und ausgerichtet werden, dass die Auslassöffnung des Stutzens in Richtung des abgehenden Nebenkanals weist.

Mittels der erfindungsgemäßen Vorrichtung kann ein Schlauchliner in einer definierten Länge in den Nebenkanal appliziert werden. Dies ermöglicht eine passgenaue Sanierung eines Nebenkanals ausgehend von dessen Einmündung in den Hauptkanal, und insbesondere bei einer von kommunaler Seite vorzunehmenden Sanierung eines in kommunaler Hand befindlichen Teils eines Nebenkanals von einem typischerweise kommunalen Hauptkanal aus, ohne dass dabei eine Fließrichtung des Hauptkanals berücksichtigt werden muss.

Aufgrund der in die Querrichtung weisenden Auslassöffnung des an einem axialen Ende des Behälterelements angeordneten Stutzens kann die Vorrichtung aber auch in vertikal verlaufenden Schächten, von denen ein zu sanierender Nebenkanal, beispielsweise in Zugangsschächten des Nebenkanals, positioniert und von dort aus betrieben werden, was die Vorrichtung besonders vielseitig einsetzbar macht.

In einer Ausführungsform ist das Behälterelement zylinderförmig ausgebildet, wobei die Zylinderachse in axialer Richtung verläuft und vorzugsweise entspricht die maximale Erstreckung der Behälteranordnung in Querrichtung dem Außendurchmesser des Behälterelements. Beispielsweise ist dabei die Auslassöffnung in Querrichtung nicht weiter als die maximale Erstreckung der Vorrichtung in Querrichtung angeordnet. Es kann aber auch vorgesehen sein, dass die Anordnung der Auslassöffnung in Querrichtung jeweils abhängig von dem Durchmesser des Hauptkanals, in dem die Vorrichtung verwendet werden soll, erfolgt, beispielsweise durch Verwendung eines entsprechend ausgeformten Stutzens. Entsprechend kann die maximale Erstreckung der Vorrichtung in Querrichtung auch durch die Erstreckung des Stutzens in Querrichtung vorgeben sein.

Auf diese Weise ist die äußere Form der Vorrichtung einem - typischerweise einen runden Querschnitt aufweisenden - Hauptkanal angepasst, sodass die Verwendung der Vorrichtung in einem Hauptkanal unter besonders effizienter Ausnutzung des zur Verfügung stehenden Platzes erfolgen kann.

Es kann vorgesehen sein, dass die maximale Erstreckung der Behälteranordnung in Querrichtung maximal 30 cm, vorzugsweise maximal 25 cm, weiter vorzugsweise maximal 20 cm beträgt.

Die Vorrichtung kann vorteilhafterweise so ausgestaltet sein, dass sie eine solche, besonders geringe Erstreckung in Querrichtung aufweist. Dadurch kann eine Vorrichtung bereitgestellt werden, die geeignet ist, das Applizieren des Schlauchliners auch von besonders engen Hauptkanälen aus vorzunehmen, die einen entsprechend geringen Durchmesser aufweisen.

Gemäß einer weiteren Ausführungsform umfasst die Behälteranordnung ein Deckelelement, das an dem Behälterelement angeordnet ist, und das einen oder mehrere Anschlüsse zur Einleitung von Druckluft und/oder Heißdampf in die Behälteranordnung aufweist. Beispielsweise ist das Deckelelement an einem vom Stutzen in axialer Richtung beabstandeten Ende des Behälterelements angeordnet. Unter Heißdampf soll ein Dampf verstanden werden, der eine Temperatur von mindestens 40°C, vorzugsweise mindestens 60°C, weiter vorzugsweise mindestens 80°C aufweist. Insbesondere kann es sich um Wasserdampf handeln.

Die Berücksichtigung eines solchen Deckelelements ermöglicht, insbesondere bei einer standardkonformen Ausgestaltung der Anschlüsse, die beispielsweise als Sechskantanschluss oder als Teil einer Klauenkupplung oder einer Schlauchkupplung ausgebildet sind, eine besonders einfach zu handhabende und vielseitige Möglichkeit zum einen zur Druckbeaufschlagung der Behälteranordnung und zum anderen zur Bewirkung der Aushärtung des ausgegebenen Schlauchliners durch Beaufschlagung mit Heißdampf. Insbesondere kann vorgesehen sein, dass ein Einlass einer Heißdampfleitung der Vorrichtung an einen entsprechenden Anschluss des Deckelelements an der Innenseite des Deckelelements angeschlossen ist, sodass eine Einleitung von Heißdampf in die Behälteranordnung durch die Einleitung von Heißdampf in die Heißdampfleitung erfolgt. Alternativ oder zusätzlich kann ein Anschluss an der Außenseite des Deckelelements zur Kupplung mit einer Führungsstange eingerichtet sein, durch die die Einleitung von Druckluft in die Behälteranordnung erfolgen kann. Eine solche Führungsstange kann starr ausgebildet sein, sodass auch ein Positionieren und Ausrichten der Behälteranordnung mittels der Führungsstande durchgeführt werden kann. Das Deckelelement kann aus dem gleichen Material ausgebildet sein wie das Behälterelement.

Eine oder mehrere Komponenten der Behälteranordnung, insbesondere das Deckelelement und der Stutzen, können ferner zumindest einen Flüssigkeitsdurchlass aufweisen, der vorzugsweise wahlweise verschließbar ist. Zum Beispiel weist der Flüssigkeitsdurchlass die Form eines oder mehrerer Löcher auf. Zusätzlich oder alternativ kann vorgesehen sein, dass das Behälterelement oder der Stutzen einen oder mehrere solche Flüssigkeitsdurchlässe aufweisen, beispielsweise in axialer Richtung um zumindest die axiale Erstreckung des Behälterelements voneinander beabstandet.

Mittels eines solchen Flüssigkeitsdurchlasses kann sich während des Applizierens innerhalb der Behälteranordnung, insbesondere in Folge der Beaufschlagung mit Heißdampf, bildende Flüssigkeit, zum Beispiel Wasser, aus der Behälteranordnung heraustreten. Ist der Flüssigkeitsdurchlass wahlweise verschließbar, so kann er während der Druckbeaufschlagung der Behälteranordnung abhängig von der Wirkung der Druckbeaufschlagung verschlossen werden. Sind mehrere Flüssigkeitsdurchlässe voneinander in axialer Richtung beabstandet vorgesehen, können diese individuell, insbesondere abhängig von der Positionierung der Vorrichtung relativ zur Fließrichtung des Hauptkanals verwendet werden. Dies erlaubt einen besonders effizienten Durchlass von Flüssigkeiten bei einer Verwendung der Vorrichtung mit oder entgegen der Fließrichtung des Hauptkanals, von dem aus das Applizieren erfolgt. Beispielsweise können mehrere Flüssigkeitsdurchlässe jeweils individuell wahlweise verschließbar sein. Es kann zum Beispiel vorgesehen sein, dass stets zumindest ein Flüssigkeitsdurchlass geöffnet ist.

Vorzugsweise umfasst die Behälteranordnung eine auslegbare innenliegende Heißdampfleitung, deren Einlass an einem geeigneten Anschluss der Behälteranordnung, insbesondere an einem Anschluss zur Einleitung von Heißdampf eines Deckelelements, anbringbar ist, und deren Auslass mit dem zweiten Endbereich des Schlauchliners verbindbar ist, sodass die Heißdampfleitung bei einer Ausgabe des Schlauchliners entlang der Länge des auszugebenden Schlauchliners innenliegend im Schlauchliner ausgelegt werden kann und bei Beaufschlagen der Behälteranordnung mit Heißdampf eine Heißdampfausgabe vom zweiten Endbereich des ausgegebenen Schlauchliners aus erfolgen kann.

Die Heißdampfleitung kann flexibel ausgebildet sein, zum Beispiel als ein entsprechend ausgestalteter Schlauch. Beispielsweise ist sie ebenfalls in dem Behälterelement aufgenommen, zum Beispiel gefaltet oder aufgerollt. Die Heißdampfleitung kann dazu eingerichtet und so mit dem auszugebenden Schlauchliner wirkverbunden sein, dass eine Durchleitung von Heißdampf durch die Heißdampfleitung nur nach einer vollständigen Ausgabe des Schlauchliners möglich ist. Der Auslass der Heißdampfleitung kann mit dem zweiten Endbereich verbunden sein, zum Beispiel mittels eines Seils, sodass bei einer Beaufschlagung der Behälteranordnung mit Heißdampf dieser im Bereich des zweiten Endbereichs aus der Heißdampfleitung austritt. Ferner kann so die Heißdampfleitung bei einer Ausgabe des Schlauchliners entlang der Länge des auszugebenden Schlauchliners innenliegend im Schlauchliner ausgelegt werden. Die Heißdampfleitung kann eine von der Länge des auszugebenden Schlauchliners abhängige Länge aufweisen, zum Beispiel derart, dass bei einer vollständigen Ausgabe des Schlauchliners auch die Heißdampfleitung vollständig ausgelegt ist. Zum Beispiel weist die Heißdampfleitung eine Länge auf, die der Summe der Länge des auszugebenden Schlauchliners und der Länge der Behälteranordnung in axialer Richtung entspricht. Die Heißdampfleitung kann dazu eingerichtet sein, eine Durchleitung von Heißdampf nur in einem vollständig ausgelegten Zustand zu ermöglichen. Die Heißdampfleitung kann zumindest entlang eines Teils ihrer Länge ein oder mehrere Perforationslöcher sein, sodass zumindest ein Teil des durch die Heißdampfleitung geführten Heißdampfs austreten kann.

Mittels einer solchen Heißdampfleitung kann ein besonders gleichmäßiges Aushärten des ausgegebenen Schlauchliners durch Beaufschlagen der Behälteranordnung mit Heißdampf erreicht werden. Darüber hinaus kann ein unzureichendes Aushärten des ausgegebenen Schlauchliners in entfernt von der Auslassöffnung befindlichen Bereichen, insbesondere in an das zweite Ende angrenzenden Bereichen, vermieden werden.

Zusätzlich kann die Vorrichtung eine Einrichtung zur Erfassung eines Innendrucks und/oder einer Temperatur der Heißdampfleitung umfassen. Vorzugsweise ist eine solche Einrichtung als ein entsprechend ausgestaltetes kombiniertes Druckmessgerät und Thermometer ausgebildet oder als ein Anschluss zum Anschließen eines, zum Beispiel von der Behälteranordnung gesondert positionierten, zum Erfassen des Innendrucks und/oder der Temperatur der Heißdampfleitung eingerichteten Geräts, beispielsweise einer außerhalb des Hauptkanals angeordneten Mischbox. Beispielhaft kann ein zur Einleitung von Heißdampf ausgebildeter Anschluss eines Deckelelements der Behälteranordnung als ein solcher Anschluss ausgebildet sein.

Mittels einer solchen Einrichtung kann, zum Beispiel anhand der Erfassung des Innendrucks der Heißdampfleitung, überprüft werden, ob der auszugebende Schlauchliner vollständig ausgegeben ist. Insbesondere kann ein Abfall eines auf die Heißdampfleitung gegebenen Drucks ein vollständiges Auslegen der Heißdampfleitung anzeigen. Vor dem vollständigen Auslegen kann eine Fluidkommunikation zwischen Einlass und Auslass der Heißdampfleitung nicht stattfinden, insbesondere da die Heißdampfleitung innerhalb der Behälteranordnung durch selbstbewirkte Leitungsobstruktionen, zum Beispiel Leitungsknicke, blockiert ist. Eine Druckbeaufschlagung der Heißdampfleitung in diesem Zustand ist dementsprechend mittels der Einrichtung erfassbar. Ist die Heißdampfleitung vollständig ausgelegt, kann eine Fluidkommunikation zwischen Einlass und Auslass erfolgen, insbesondere da sie keine Leitungsobstruktionen mehr aufweist. In diesem Zustand ist eine Druckbeaufschlagung nur in geringerem Maße durch die Einrichtung erfassbar. Bei dauerhafter Druckbeaufschlagung der Heißdampfleitung während der Ausgabe des Schlauchliners kann somit ein Abfall des auf die Heißdampfleitung gegebenen Drucks erfasst werden, der das vollständige Auslegen der Heißdampfleitung und entsprechend das vollständige Ausgeben des Schlauchliners indizieren kann. Ist die Einrichtung ferner zum Erfassen einer Temperatur der Heißdampfleitung ausgebildet, so kann, beispielsweise bei Beaufschlagen der Behälteranordnung mit Heißdampf, auch eine Überwachung der Heißdampftemperatur erfolgen. So kann sichergestellt werden, dass der Heißdampf eine für das Aushärten geeignete Temperatur aufweist, und zum Beispiel eine Mindesttemperatur überschreitet und/oder eine Maximaltemperatur nicht überschreitet.

In einer Ausführungsform umfasst die Behälteranordnung ein erstes und/oder ein zweites Befestigungselement, wobei der Stutzen mittels des ersten Befestigungselements an einem ersten Befestigungsbereich des Behälterelements befestigbar ist und/oder wobei das Deckelelement mittels des zweiten Befestigungselements an einem zweiten Befestigungsbereich des Behälterelements befestigbar ist. Beispielhaft können die Befestigungselemente als Manschetten ausgebildet sein. Die Befestigung mittels eines Befestigungselements an einem Befestigungsbereich kann gasdicht ausgebildet sein. Zusätzlich können die Befestigungselemente ein oder mehrere Fixierbleche aufweisen zur Absicherung der miteinander verbundenen Komponenten der Behälteranordnung gegen eine rotatorische Relativbewegung, zum Beispiel um die axiale Achse der Behälteranordnung, und/oder zur Absicherung gegen eine Kippbewegung der Komponenten zueinander. Beispielsweise kann die Erstreckung des Behälterelements in Querrichtung in den Befestigungsbereichen geringer sein als außerhalb, sodass auch bei Implementierung der Befestigungselemente die maximale Erstreckung der Behälteranordnung in Querrichtung durch den Außendurchmesser des Behälterelements vorgegeben wird.

Durch die Berücksichtigung entsprechend ausgebildeter Befestigungselemente und Befestigungsbereiche des Behälterelements kann eine Zusammensetzbarkeit der Komponenten der Behälteranordnung und eine Modularität der Behälteranordnung auf besonders einfache Art und Weise bereitgestellt werden.

Des Weiteren wird gemäß der Erfindung ein Kanalsanierungssystem offenbart, umfassend eine erfindungsgemäße Vorrichtung und einen in einem Behälterelement der Vorrichtung aufnehmbaren Schlauchliner, wobei ein erster Endbereich des Schlauchliners mittels eines Auslassbefestigungselements an einem Befestigungsbereich des Stutzens befestigbar ist. Beispielsweise kann ein erster Endbereich des Schlauchliners durch die Auslassöffnung geführt, umgekrempelt, über die Umwandung der Auslassöffnung gestülpt und an der Außenseite des Stutzens befestigt werden, zum Beispiel mit dem Auslassbefestigungselement, beispielsweise einer geeigneten Auslassmanschette.

Weist der Stutzen an der Auslassöffnung, beispielsweise unmittelbar an der Auslassöffnung, eine nach außen ragende Verdickung auf, kann der erste Endbereich des Schlauchliners nicht unmittelbar an der Auslassöffnung, sondern erst hinter dieser Verdickung, und somit in Querrichtung von der Auslassöffnung beabstandet, mittels des Auslassbefestigungselements befestigt sein. Dies erlaubt eine besonders abrutschsichere Befestigung des Schlauchliners an der Vorrichtung.

Das Kanalsanierungssystem kann auch weitere, zum Beispiel außerhalb der Vorrichtung angeordnete, Komponenten umfassen, beispielsweise Mittel zur Druckbeaufschlagung der Behälteranordnung und/oder Mittel zur Beaufschlagung der Behälteranordnung mit Heißdampf, wie zum Beispiel einen Kompressor und/oder eine geeignete Mischbox.

Zum Beispiel weist der Schlauchliner eine innenliegende Linerschicht und eine außenliegende Stützschicht auf. Dabei kann die Stützschicht als Stützschlauch ausgebildet sein und/oder die Linerschicht als aushärtbares Linermaterial ausgebildet sein oder ein aushärtbares Linermaterial umfassen. Entsprechend weist der nach erfolgter Ausgabe inversierte Schlauchliner eine umgekehrte Schichtfolge auf: bei dem inversierten Schlauchliner sind dann die Linerschicht außenliegend und die Stützschicht innenliegend angeordnet. Entsprechend ist auch bei einem Umstülpen eines Endes des Schlauchliners, beispielsweise über die Umwandung der Auslassöffnung zur Befestigung des Schlauchliners an der Außenseite des Stutzens, die Schichtfolge in dem umgestülpten Teil umgekehrt.

Der Schlauchliner kann in zumindest einem Teil des ersten Endbereichs linerschichtfrei ausgebildet sein, sodass er unmittelbar am Ende des Schlauchliners nur die Stützschicht aufweist. Dies hat zur Folge, dass auch nach einem Umstülpen dieses Endes dort weiterhin die Stützschicht an der Außenseite des Schlauchliners angeordnet ist. Beispielsweise erstreckt sich der linerschichtfreie Teil des ersten Endbereichs entlang der Länge des Schlauchliners um zumindest die Erstreckung des Auslassbefestigungselements in dieser Richtung.

Vorzugsweise ist nur die Stützschicht mittels des Auslassbefestigungselements an der Vorrichtung befestigbar. Auf diese Weise kann eine besonders zuverlässige Befestigung des Schlauchliners an der Vorrichtung vorgenommen werden, bei der keine nach dem Applizieren auftretende Materialveränderung des Schlauchliners berücksichtigt werden muss. Darüber hinaus kann so der anfallende Verschnitt von Innenschichtmaterial reduziert werden.

Zusätzlich kann eine Schlauchmanschette zur Ummantelung und Fixierung der Stützschicht in einem an den ersten Endbereich, beispielsweise unmittelbar, angrenzenden Bereich des Schlauchliners vorgesehen sein. Vorzugsweise beträgt die Erstreckung der Schlauchmanschette entlang der Länge des Schlauchliners mindestens 4 cm, vorzugsweise mindestens 5 cm, und maximal 8 cm, vorzugsweise maximal 6 cm.

Aufgrund von lokalen Druckerhöhungen kann es in einem unmittelbar an die Auslassöffnung angrenzenden Bereich zu einer Ausdehnung der Stützschicht vor der vollständigen Ausgabe des Schlauchliners und einer Vergrößerung des Innendurchmessers der Stützschicht kommen. Mittels einer Schlauchmanschette kann die Stützschicht in Richtung des Durchmessers des Schlauchliners fixiert werden. So kann der Durchmesser der Stützschicht während der Ausgabe bewahrt und das Auftreten einer solchen Ausdehnung, was zu einem Abrutschen der Linerschicht in Ausgaberichtung und somit zu einer unkontrollierten Ausgabe führen kann, wirksam verhindert werden.

Die Schlauchmanschette kann zum Brechen bei einem vorgegebenen von der Stützschicht auf die Schlauchmanschette ausgeübten Druck ausgebildet sein. Beispielsweise kann die Schlauchmanschette dazu eine geeignete Sollbruchstelle aufweisen. Alternativ oder zusätzlich kann die Schlauchmanschette zum Ausdehnen bei einer Erwärmung von mehr als 40°C, insbesondere bei einer Beaufschlagung mit Heißdampf, ausgebildet sein.

Auf diese Weise kann erreicht werden, dass die Wirkung der Schlauchmanschette nur bis zur vollständigen Ausgabe des Schlauchliners aufrechterhalten wird. Soll der Schlauchliner zur Beaufschlagung mit Heißdampf entlang der Länge des ausgegebenen Schlauchliners möglichst gleichmäßig ausgedehnt werden, kann eine solche planvolle Ausdehnung so auch in dem von der Schlauchmanschette umfassten Bereich erfolgen. Ist die Schlauchmanschette zum Ausdehnen bei einer Beaufschlagung mit Heißdampf ausgebildet, kann sichergestellt werden, dass die beschriebene planvolle Ausdehnung des von der Schlauchmanschette umfassten Bereichs bei Durchführung der Heißdampfbeaufschlagung erreicht wird.

Vorzugsweise ist ein mit dem zweiten Endbereich des Schlauchliners verbundenes Zugelement umfasst, wobei das Deckelelement zumindest eine Öffnung zur Durchführung des Zugelements aufweist. Beispielsweise ist das Zugelement nur mit einer Stützschicht des Schlauchliners verbunden.

Aufgrund der Befestigung am zweiten Endbereich wird das Zugelement während des Ausgebens innenliegend im Schlauchliner entlang der Länge des Schlauchliners mit ausgelegt. Nach erfolgtem Applizieren des Schlauchliners können so Materialreste aus dem zu sanierenden Nebenkanal in die Behälteranordnung zurückgezogen und aus dem Nebenkanal entfernt werden. Bei einer Ausgestaltung des Schlauchliners mit Stützschicht und Linerschicht, kann so die Stützschicht nach erfolgter Aushärtung des Linermaterials in die Behälteranordnung zurückgezogen werden. Das Zurückziehen des Zugelements kann besonders effektiv durch die Durchführungsöffnung des Deckelelements realisiert werden. Um den Einfluss der Berücksichtigung einer solchen Durchführungsöffnung auf eine Druckbeaufschlagung der Behälteranordnung zu reduzieren, kann die Durchführungsöffnung entsprechende Dichtung aufweisen, beispielsweise eine Gummidichtung.

In einer weiteren Ausführungsform kann das Kanalsanierungssystem ein Fahrgestell zum Positionieren der Vorrichtung innerhalb eines Hauptkanals umfassen. Beispielsweise ist ein solches Fahrgestell als Wagen ausgebildet, auf dem die Vorrichtung angeordnet werden kann.

Auf diese Weise kann die Positionierung des Kanalsanierungssystems innerhalb eines Hauptkanals vereinfacht werden. Die Radabstände eines solchen Wagens können veränderbar ausgebildet sein, alternativ oder zusätzlich können die Achsen eines solchen Wagens jeweils in ihrer Länge veränderbar ausgebildet sein. Auf diese Weise kann das Kanalsanierungssystem auf besonders einfache Weise in Hauptkanälen mit unterschiedlichen Durchmessern positioniert werden. Insbesondere kann vorgesehen sein, dass die Erstreckung des Kanalsanierungssystems inklusive des Fahrgestells in Querrichtung einen Maximalwert von 60 cm, vorzugsweise 40 cm, weiter vorzugsweise 30 cm, nicht überschreitet. Dies ermöglicht eine besonders vielseitige Verwendbarkeit des Kanalsanierungssystems.

Gemäß der Erfindung wird zudem eine Verwendung einer erfindungsgemäßen Vorrichtung oder eines erfindungsgemäßen Kanalsanierungssystems zur Sanierung, von einem Hauptkanal aus, zumindest eines Teils eines von dem Hauptkanal abgehenden Nebenkanals, insbesondere eines Entwässerungskanals, vorzugsweise eines Hausanschlusskanals, offenbart.

Gemäß der Erfindung wird des Weiteren ein Verfahren zum Applizieren eines Schlauchliners in einen Nebenkanal, insbesondere einen Entwässerungskanal, offenbart, umfassend:
- Aufnehmen eines Schlauchliners in ein Behälterelement einer Behälteranordnung, die sich entlang einer axialen und einer senkrecht zur axialen Richtung verlaufenden Querrichtung erstreckt;
- Befestigen eines ersten Endbereich des Schlauchliners an einem Stutzen der Behälteranordnung, der an einem axialen Ende des Behälterelements angeordnet ist, und der eine in Querrichtung weisende Auslassöffnung zur Ausgabe des Schlauchliners aus dem Behälterelement aufweist, wobei der erste Endbereich durch eine Auslassöffnung des Stutzens geführt und über die Umwandung der Auslassöffnung gestülpt wird;
- Positionieren und Ausrichten der Behälteranordnung in einem Hauptkanal, von dem der Nebenkanal abgeht, zur Ausgabe des Schlauchliners aus der Auslassöffnung in den Nebenkanal;
- Ausgeben des Schlauchliners aus der Auslassöffnung in den Nebenkanal, vorzugsweise durch Beaufschlagen der Behälteranordnung mit Druckluft; und
- Aushärten des ausgegebenen Schlauchliners, vorzugsweise durch Beaufschlagen der Behälteranordnung mit Heißdampf.

Zur näheren Erläuterung weiterer vorteilhafter Weiterbildungen des Verfahrens wird auf die vorstehend beschriebenen Weiterbildungen der Vorrichtung und des Kanalsanierungssystems Bezug genommen.

Gemäß der Erfindung wird darüber hinaus eine Schlauchmanschette zur Verwendung in einem erfindungsgemäßen Kanalsanierungssystem offenbart.

Ebenfalls wird gemäß der Erfindung ein Schlauchliner zur Verwendung in einem erfindungsgemäßen Kanalsanierungssystem offenbart, der eine Linerschicht als Innenschicht und eine Stützschicht als Außenschicht umfasst wobei eine zwischen der Linerschicht und der Stützschicht anzuordnende erfindungsgemäße Schlauchmanschette vorgesehen ist.

Die oben beschriebenen Ausführungsformen und Ausgestaltungen sind lediglich als beispielhaft zu verstehen und sollen die vorliegende Erfindung in keiner Weise einschränken.

Die Erfindung wird nachfolgend unter Bezugnahme auf die beigefügten Zeichnungen anhand von vorteilhaften Ausführungsformen beispielhaft näher erläutert. Es zeigen:
- Figur 1: eine schematische Darstellung eines Ausführungsbeispiels einer erfindungsgemäßen Verwendung einer erfindungsgemäßen Vorrichtung;
- Figur 2: eine schematische Darstellung eines Ausführungsbeispiels einer erfindungsgemäßen Vorrichtung;
- Figur 3: eine schematische Darstellung eines Ausführungsbeispiels eines erfindungsgemäßen Kanalsanierungssystems; und
- Figur 4: eine schematische Detaildarstellung des Kanalsanierungssystems der Fig. 3; und
- Figur 5: ein schematisches Flussdiagramm eines Ausführungsbeispiels eines erfindungsgemäßen Verfahrens.

Die Figuren zeigen Ausführungsbeispiele der Erfindung. Dabei verweisen gleiche Bezugszeichen auf gleiche oder gleichartige Elemente der gezeigten Ausführungsbeispiele.

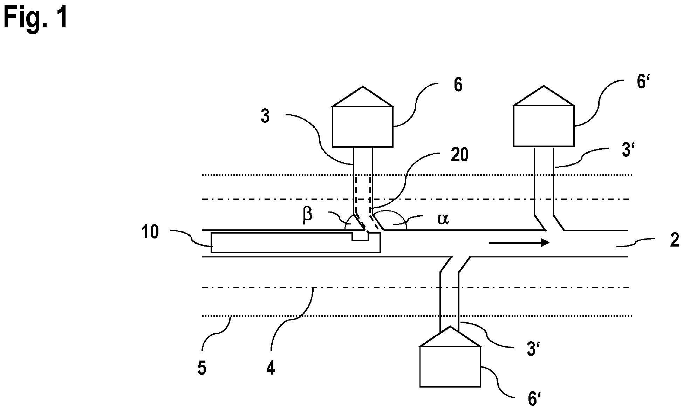

In Fig. 1 ist eine schematische Darstellung eines Ausführungsbeispiels einer erfindungsgemäßen Verwendung einer erfindungsgemäßen Vorrichtung 10 zur Sanierung eines Teils eines von einem Hauptkanal 2 ausgehenden Nebenkanals 3. Der Hauptkanal 2 ist beispielhaft als ein kommunaler Abwasserkanal einer Ortskanalisation dargestellt, der unterhalb einer Straße 4 verläuft. Die Fließrichtung des Hauptkanals 2 ist durch einen Pfeil angedeutet. Der Hauptkanal 2 weist einen Durchmesser von 30 cm auf. Bei dem Nebenkanal 3 handelt es sich um einen Entwässerungskanal in Form eines Hausanschlusskanals eines an der Straße 4 liegenden Hauses 6 mit einem Durchmesser von 15 cm. Weitere von dem Hauptkanal 2 abgehende und als Hausanschlusskanäle von Häusern 6' ausgebildete Nebenkanäle 3' sind ebenfalls eingezeichnet.

Die Nebenkanäle 3, 3' sind jeweils in Richtung der Fließrichtung des Hauptkanals abgeschrägt, sodass sie mit dem Hauptkanal in Fließrichtung einen stumpfen Winkel α und entgegen dessen Fließrichtung einen spitzen Winkel β einschließen. Die Nebenkanäle 3, 3' weisen jeweils einen mit einem Haus 6, 6' verbundenen Teil in Privateigentum und einen mit dem Hauptkanal 2 verbundenen kommunalen Teil auf. Die Grenze dieser beiden Teile ist in Fig. 1 durch eine gepunktete Trennlinie 5 symbolisiert. Im dargestellten Beispiel erfolgt eine Sanierung des Nebenkanals 3 nur in dem sich in kommunaler Hand befindlichen Teil.

Die Vorrichtung 10 ist zum Applizieren eines Schlauchliners 20 von dem Hauptkanal 2 aus in den von dem Hauptkanal abgehenden Nebenkanal 3 eingerichtet. Die Vorrichtung 10 ist in dem Hauptkanal 2 in Fließrichtung des Hauptkanals 2 positioniert und so ausgerichtet, dass ein in der Vorrichtung 10 aufgenommener und an der Vorrichtung 10 befestigter Schlauchliner 20 von dem Hauptkanal 2 aus in den Nebenkanal 3 ausgegeben und ausgehärtet werden kann.

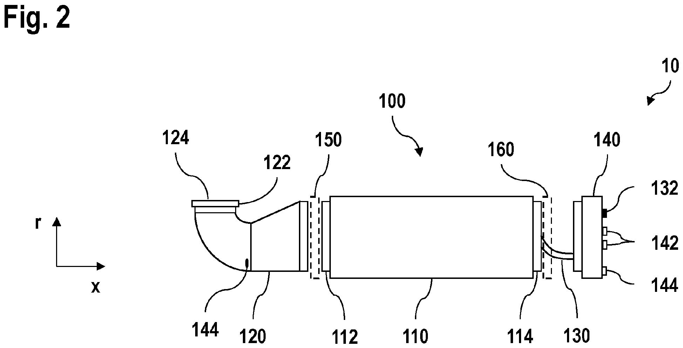

Fig. 2 zeigt eine schematische Darstellung eines Ausführungsbeispiels einer erfindungsgemäßen Vorrichtung 10, die dazu ausgebildet ist, einen Schlauchliner 20 von einem Hauptkanal 2 aus in einen von dem Hauptkanal 2 abgehenden Nebenkanal 3 zu applizieren.

Die Vorrichtung 10 umfasst eine Behälteranordnung 100, die sich entlang einer axialen Richtung x und einer Querrichtung r, senkrecht zur axialen Richtung x, erstreckt. Die Behälteranordnung 100 weist ein Behälterelement 110, einen Stutzen 120, ein Deckelelement 140, eine Heißdampfleitung 130 sowie ein erstes Befestigungselement 150 und ein zweites Befestigungselement 160 auf. Der Stutzen 120 ist als eine gesonderte Komponente der Behälteranordnung 100 ausgebildet und an einem axialen Ende des Behälterelements 110 angeordnet. Die maximale Erstreckung der Behälteranordnung 100 in Querrichtung r beträgt 18 cm.

Bei dem Behälterelement 110 handelt es sich um ein zylinderförmiges Kunststoffrohr, in das der Schlauchliner 20 aufgenommen werden kann. Dabei verläuft die Zylinderachse des Behälterelements 110 in axialer Richtung x und der Außendurchmesser des Behälterelements 110 entspricht der maximalen Erstreckung der Behälteranordnung 100 in Querrichtung r. Die Innenwand des Behälterelements 110 ist reibungsarm sowie kanten- und stufenlos gestaltet.

Der trichterförmig ausgebildete Stutzen 120 umfasst eine durch den Ausgang des Trichterhalses gebildete und in Querrichtung r weisende Auslassöffnung 124 auf, die zur Ausgabe des im Behälterelement 110 aufgenommenen Schlauchliners 20 in Querrichtung r ausgestaltet ist. Entsprechend schließen die Ausgaberichtung und die axiale Richtung x einen Winkel von 90° ein. Die Trichteröffnung des Stutzens 120 ist an einer Öffnung des Behälterelements 110 befestigt. Im vorliegenden Beispiel handelt es sich bei dem Stutzen 120 um einen Rohrstutzen, der aus dem gleichen Material gefertigt ist wie das Behälterelement 110.

Der Stutzen 120 weist einen Befestigungsbereich 122 zu Befestigung eines ersten Endbereichs 22 des Schlauchliners 20 auf, sodass der in einem zweiten Endbereich 26 geschlossene Schlauchliner 20 bei Druckbeaufschlagung der Behälteranordnung 100 ausgegeben wird (vgl. Fig. 2). Der Befestigungsbereich 122 wird durch die die Auslassöffnung 124 umgebende Umwandung des Stutzens 120 gebildet und erstreckt sich über eine Länge in radialer Richtung r von 70 mm. Im Befestigungsbereich 122 weist die Umwandung des Stutzens 120 eine nach außen, im dargestellten Beispiel demnach in axialer Richtung x, ragende Verdickung auf.

Die Auslassöffnung 124 ist rund ausgebildet und weist einen geringeren Querschnitt auf als der Querschnitt der Innenseite des Behälterelements 110 in Querrichtung. Der Durchmesser der Auslassöffnung 124 beträgt 80 mm.

Das Deckelelement 140 ist an einem vom Stutzen 120 in axialer Richtung x beabstandeten Ende des Behälterelements 110 angeordnet und weist Anschlüsse 142 zur Einleitung von Druckluft und Heißdampf in die Behälteranordnung 100 auf. An die Anschlüsse 142 kann eine Führungsstange zur Einleitung von Druckluft und/oder eine Zuleitung von einer Mischbox zur Beaufschlagung der Behälteranordnung 100 mit Heißdampf angeschlossen werden. Das Deckelelement 140 ist wie das Behälterelement 110 aus Kunststoff ausgeformt.

Sowohl am Stutzen 120 als auch am Deckelelement 140 ist jeweils ein Flüssigkeitsdurchlass 144 in Form eines Lochs in der Umwandung vorgesehen, um beim Applizieren gegebenenfalls gebildete Flüssigkeiten aus der Behälteranordnung 100 austreten lassen zu können. Die Flüssigkeitsdurchlässe 144 sind somit in axialer Richtung x um mehr als die axiale Erstreckung des Behälterelements 110 voneinander beabstandet. Beide Flüssigkeitsdurchlässe 144 sind dabei individuell wahlweise verschließbar.

Auf der Innenseite des Deckelelements 140 ist an dem Anschluss 142 zur Einleitung von Heißdampf ist die flexible Heißdampfleitung 130 angeschlossen, die innen in der Behälteranordnung 100 liegt und von dem Behälterelement 110 aufgenommen ist. Bei der Heißdampfleitung 130 handelt es sich um einen Schlauch, dessen Einlass an dem Anschluss 142 angebracht und dessen Auslass mit dem zweiten Endbereich 26 des Schlauchliners 20 verbindbar ist, sodass die Heißdampfleitung 130 bei einer Ausgabe des Schlauchliners 20 entlang der Länge des auszugebenden Schlauchliners 20 innenliegend im Schlauchliner 20 ausgelegt werden kann und bei Beaufschlagung der Behälteranordnung 100 mit Heißdampf eine Ausgabe des Heißdampfs ausgehend vom zweiten Endbereich 26 des ausgegebenen Schlauchliners 20 erfolgen kann (vgl. Fig. 2).

An dem Deckelelement 140 ist eine Einrichtung 132 zur Erfassung eines Innendrucks und einer Temperatur der Heißdampfleitung 130 in Form eines kombinierten Druckmessgeräts und Thermometers angeordnet.

Zur Veranschaulichung sind die Komponenten der Behälteranordnung 100 in nicht miteinander befestigtem Zustand abgebildet, sollen aber als wie folgt beschrieben miteinander befestigt verstanden werden.

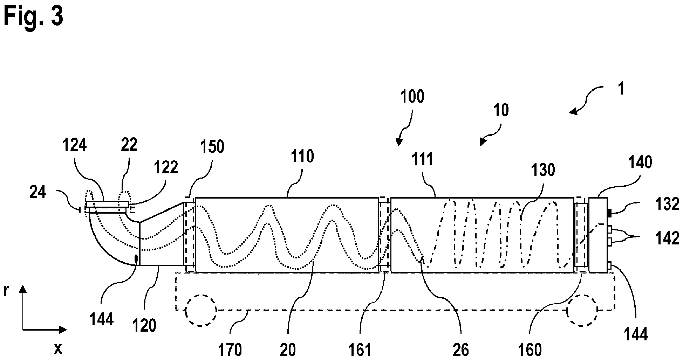

Der Stutzen 120 ist mittels des ersten Befestigungselements 150 an einem ersten Befestigungsbereich 112 des Behälterelements 110 befestigt. Das Deckelelement 140 ist mittels des zweiten Befestigungselements 160 an einem zweiten Befestigungsbereich 114 des Behälterelements 110 befestigt. An den Befestigungsbereichen 112 und 114 und den dazu jeweils korrespondierenden Befestigungsbereichen des Stutzens 120 und des Deckelelements 140 sind jeweils Flansche angeordnet, die mittels der Befestigungselemente 150 und 160 miteinander verbunden sind. Die Befestigungselemente 150 und 160 sind als Manschetten ausgebildet, die jeweils zwei Flansche miteinander befestigen. In den Befestigungsbereichen 112 und 114 ist die Erstreckung des Behälterelements 110 in Querrichtung jeweils reduziert, sodass die dort angeordneten Befestigungselemente 150 und 160 in ihrer maximalen Erstreckung in Querrichtung jeweils nicht über den Außendurchmesser des Behälterelements 110 von 18 cm hinausgehen. In Fig. 3 ist eine schematische Darstellung eines Ausführungsbeispiels eines erfindungsgemäßen Kanalsanierungssystems 1 dargestellt, das eine Vorrichtung 10 wie vorstehend im Zusammenhang mit Fig. 2 beschrieben und einen Schlauchliner 20 umfasst.

Im Unterschied zur Vorrichtung 10 der Fig. 2 weist die Behälteranordnung 100 der in Fig. 3 dargestellten Vorrichtung 10 ein zusätzliches Behälterelement 111 auf, das gleichartig zum Behälterelement 110 ausgestaltet ist, und insbesondere zu den ersten und zweiten Befestigungsbereichen 112, 114 analoge Befestigungsbereiche aufweist. Mittels eines Befestigungselements 161 ist das zusätzliche Behälterelement 111 an dem zweiten Befestigungsbereich 114 des Behälterelements 110 befestigt, wobei die Behälterelemente 110 und 111 einen gemeinsamen Innenraum bilden zur Aufnahme des Schlauchliners 20 und der mit dem zweiten Endbereich 26 des Schlauchliners 20 verbundenen gefalteten Heißdampfleitung 130. Das Deckelelement 140 ist mittels des zweiten Befestigungselements 160 an dem zusätzlichen Behälterelement 111 befestigt.

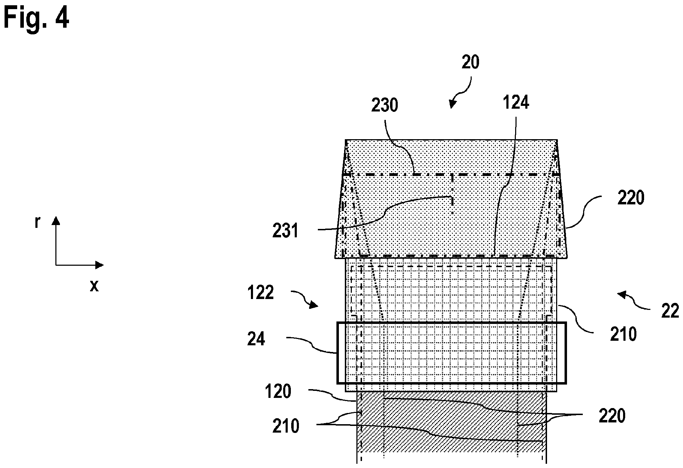

Der Schlauchliner 20 ist in dem Behälterelement 110 aufgenommen und ein erster Endbereich 22 des Schlauchliners 20 ist durch die Auslassöffnung 124 geführt, umgekrempelt, über die Umwandung der Auslassöffnung 124 gestülpt und an dem Befestigungsbereich 122 mittels eines als Manschette ausgestalteten Auslassbefestigungselements 24 befestigt. Insbesondere ist nur eine Stützschicht 210 des Schlauchliners 20 mittels des Auslassbefestigungselements 24 an dem Befestigungsbereich 122 befestigt (vgl. Fig. 4).

Des Weiteren umfasst das Kanalsanierungssystem 1 ein Fahrgestell 170 zum Positionieren der Vorrichtung 10 innerhalb des Hauptkanals 2. Das Fahrgestell 170 ist als Wagen ausgebildet, auf dem die Vorrichtung 10 angeordnet ist. Die Radabstände sowie die Länge der Achsen sind beim Fahrgestell 170 veränderbar ausgestaltet.

Die Länge der Heißdampfleitung 130 ist so ausgestaltet, dass bei einer vollständigen Ausgabe des Schlauchliner 20 auch die Heißdampfleitung 130 vollständig ausgelegt ist. Dazu weist die Heißdampfleitung 130 eine solche Länge auf, die im Wesentlichen der Summe der Länge des zu applizierenden Schlauchliners 20 und der Länge der Behälteranordnung 100 in axialer Richtung x entspricht. Eine Durchleitung von Heißdampf durch die Heißdampfleitung 130 ist dabei nur möglich, wenn die Heißdampfleitung 130 vollständig ausgelegt ist. Erst dann ist die Heißdampfleitung 130 obstruktionsfrei und bei Beaufschlagung der Behälteranordnung 100 mit Heißdampf kann dieser durch die Heißdampfleitung 130 hindurch gelangen, wobei der Heißdampf dann ausgehend vom zweiten Endbereich 26 des ausgegebenen Schlauchliners 20 ausgegeben wird.

Fig. 4 zeigt eine schematische Detaildarstellung des in Fig. 3 dargestellten Kanalsanierungssystems 1. Zu sehen ist darin insbesondere ein den Befestigungsbereich 122 und die Auslassöffnung 124 umfassender Teil des Stutzens 120 (schraffiert hinterlegt wenn in der Draufsicht im Vordergrund) sowie der durch die Auslassöffnung 124 geführte erste Endbereich 22 des in dem Behälterelement der Behälteranordnung aufgenommenen Schlauchliners 20, der umgekrempelt und über die Umwandung der Auslassöffnung 124 gestülpt und mittels des Auslassbefestigungselements 24 an dem Befestigungsbereich 122 befestigt ist. Der Befestigungsbereich 122 weist unmittelbar an der Auslassöffnung 124 eine nach außen, entsprechend in axialer Richtung x, ragende Verdickung auf. Der erste Endbereich 22 des Schlauchliners 20 ist nicht unmittelbar an der Auslassöffnung 124, sondern erst hinter dieser Verdickung, und somit in Querrichtung r von der Auslassöffnung 124 beabstandet mittels des Auslassbefestigungselements 24 an dem Befestigungsbereich 122 befestigt.

Der Schlauchliner 20 weist eine Stützschicht 210 (kariert hinterlegt wenn in der Draufsicht im Vordergrund) und eine Linerschicht 220 (punktiert hinterlegt wenn in der Draufsicht im Vordergrund) auf. Die Schichten 210, 220 des Schlauchliners 20 sind lose übereinander angeordnet und relativ zueinander bewegbar. Die Stützschicht 210 ist als ein Verstärkungsfasern und Folien umfassender Stützschlauch ausgebildet und die Linerschicht 220 als aushärtbares eine Harzmatrix und eine Trägerfaser umfassendes Linermaterial.

Im ersten Endbereich 22 ist der Schlauchliner 20 linerschichtfrei ausgebildet, sodass er dort nur die Stützschicht 210 aufweist. Da der Schlauchliner 20 nach Durchführung durch die Auslassöffnung 124 über die Umwandung der Auslassöffnung 124 gestülpt ist, ist die Schichtfolge des umgestülpten Schlauchliners 20 4 umgekehrt, wie im linken Teil der Abbildung zu erkennen - die Linerschicht 220 ist im Vordergrund. Dadurch, dass der Schlauchliner 20 im ersten Endbereich 22 linerschichtfrei ausgebildet ist, weist er dort keine (in Folge des Umstülpens eigentlich außen liegende) Linerschicht 220 auf, sondern nur die Stützschicht 210, sodass die Stützschicht 210 sich im ersten Endbereich 22 auch nach erfolgter Umstülpung bei der in Fig. 4 dargestellten Draufsicht im Vordergrund befindet.

Darüber hinaus ist eine Schlauchmanschette 230 vorgesehen, die die Stützschicht 210 in einem an den ersten Endbereich 22 angrenzenden Bereich des Schlauchliners 20 ummantelt und fixiert. Entsprechend ist die Schlauchmanschette 230 zwischen den beiden Schichten 210, 220 angeordnet, sodass sie sich in der Draufsicht der Fig. 4 auch nicht im Vordergrund befindet und daher strichpunktiert dargestellt ist. Die Schlauchmanschette 230 erstreckt sich 5 cm entlang der Länge des Schlauchliners 20, im dargestellten Beispiel entsprechend in Querrichtung r. Die Schlauchmanschette 230 ist dazu eingerichtet, sich bei einer Beaufschlagung mit Heißdampf auszudehnen, wodurch sie ihre Fixierungswirkung verliert. Darüber hinaus weist die Schlauchmanschette 230 eine Sollbruchstelle 231 auf, sodass sie auch bei Überschreiten eines spezifischen von dem Schlauchliner 20 auf die Schlauchmanschette 230 ausgeübten Drucks bricht und die Fixierungswirkung aufgehoben wird.

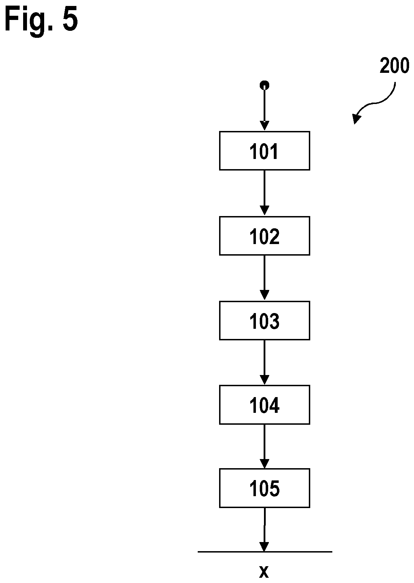

In Fig. 5 ist ein schematisches Flussdiagramm eines Ausführungsbeispiels eines erfindungsgemäßen Verfahrens 200 zum Applizieren eines Schlauchliners 20 in einen Nebenkanal 3 dargestellt.

In einem ersten Schritt 101 wird ein Schlauchliner 20 in einen Behälterelement 110 eine Behälteranordnung 100, die sich entlang einer axialen x und einer senkrecht zur axialen Richtung x verlaufenden Querrichtung r erstreckt, aufgenommen.

In einem weiteren Schritt 102 wird ein erster Endbereich 22 des Schlauchliners 20 an einem Stutzen 120 der Behälteranordnung 100 befestigt. Der Stutzen 120 ist an einem axialen Ende des Behälterelements 110 angeordnet und weist eine in Querrichtung r weisende Auslassöffnung 124 zur Ausgabe des Schlauchliners 20 aus der Behälteranordnung 100 auf. Um an dem Stutzen 120 befestigt zu werden, wird der erste Endbereich 22 durch die Auslassöffnung 124 geführt und über die Umwandung der Auslassöffnung 124 gestülpt.

Daraufhin erfolgt ein Positionieren und Ausrichten 103 der Behälteranordnung 100 in einem Hauptkanal 2, von dem der Nebenkanal 3 abgeht, um den Schlauchliner 20 aus der Auslassöffnung 124 in den Nebenkanal 3 auszugeben.

In Schritt 104 wird der Schlauchliner 20 aus der Auslassöffnung 124 in den Nebenkanal 3 durch Beaufschlagen der Behälteranordnung 100 mit Druckluft ausgegeben. Der ausgegebene Schlauchliner 20 wird in Schritt 105 durch Beaufschlagen der Behälteranordnung 100 mit Heißdampf ausgehärtet.

Die in dieser Spezifikation beschriebenen Ausführungsformen der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion der Ausführungsform unerlässlich oder wesentlich ist.

## Patentansprüche

1. Vorrichtung (10) zum Applizieren, von einem Hauptkanal (2) aus, eines Schlauchliners (20) in einen von dem Hauptkanal (2) abgehenden Nebenkanal (3), umfassend eine sich entlang einer axialen Richtung (x) und einer senkrecht zur axialen Richtung (x) verlaufenden Querrichtung (r) erstreckende Behälteranordnung (100), die ein Behälterelement (110) zur Aufnahme des Schlauchliners (20) und einen an einem axialen Ende des Behälterelements (110) angeordneten Stutzen (120) aufweist, wobei der Stutzen (120) eine in Querrichtung (r) weisende Auslassöffnung (124) zur Ausgabe des im Behälterelement (110) aufgenommenen Schlauchliners (20) und einen Befestigungsbereich (122) zur Befestigung eines ersten Endbereichs (22) des Schlauchliners (20) aufweist, sodass der in einem zweiten Endbereich (26) verschlossene Schlauchliner (20) bei Druckbeaufschlagung der Behälteranordnung (100) in Querrichtung (r) ausgegeben wird, **gekennzeichnet durch** eine Schlauchmanschette (230) zur Ummantelung und Fixierung einer Stützschicht (210) des Schlauchliners (20) in einem an den ersten Endbereich (22) angrenzenden Bereich.

2. Vorrichtung (10) gemäß Anspruch 1, wobei das Behälterelement (110) zylinderförmig ausgebildet ist, die Zylinderachse in axialer Richtung (x) verläuft und vorzugsweise die maximale Erstreckung der Behälteranordnung (100) in Querrichtung (r) dem Außendurchmesser des Behälterelements (110) entspricht.

3. Vorrichtung (10) gemäß einem der vorhergehenden Ansprüche, wobei die maximale Erstreckung der Behälteranordnung (100) in Querrichtung (r) maximal 30 cm, vorzugsweise maximal 25 cm, weiter vorzugsweise maximal 20 cm beträgt.

4. Vorrichtung (10) gemäß einem der vorhergehenden Ansprüche, wobei die Behälteranordnung (100) ein erstes Befestigungselement (150) umfasst, wobei der Stutzen (120) mittels des ersten Befestigungselements (150) an einem ersten Befestigungsbereich (112) des Behälterelements (110) befestigbar ist.

5. Vorrichtung (10) gemäß einem der vorhergehenden Ansprüche, wobei die Behälteranordnung (100) ein Deckelelement (140) umfasst, das an dem Behälterelement (110) angeordnet ist und das einen oder mehrere Anschlüsse (142) zur Einleitung von Druckluft und/oder Heißdampf in die Behälteranordnung (100) aufweist, wobei das Deckelelement (140) vorzugsweise zumindest einen Flüssigkeitsdurchlass (144) aufweist.

6. Vorrichtung (10) gemäß Anspruch 5, wobei die Behälteranordnung (100) ein zweites Befestigungselement (160) umfasst, wobei das Deckelelement (140) mittels des zweiten Befestigungselements (160) an einem zweiten Befestigungsbereich (114) des Behälterelements (110) befestigbar ist.

7. Vorrichtung (10) gemäß einem der vorhergehenden Ansprüche, wobei die Behälteranordnung (100) eine auslegbare innenliegende Heißdampfleitung (130) umfasst, deren Einlass an einem geeigneten Anschluss der Behälteranordnung (100) anbringbar ist und deren Auslass mit dem zweiten Endbereich (26) des Schlauchliners (20) verbindbar ist, sodass die Heißdampfleitung (130) bei einer Ausgabe des Schlauchliners (20) entlang der Länge des auszugebenden Schlauchliners (20) innenliegend im Schlauchliner (20) ausgelegt werden kann und bei Beaufschlagen der Behälteranordnung (100) mit Heißdampf eine Ausgabe des Heißdampfs vom zweiten Endbereich (26) des ausgegebenen Schlauchliners (20) aus erfolgen kann.

8. Vorrichtung (10) gemäß Anspruch 7, wobei die Vorrichtung (10) eine Einrichtung (132) zur Erfassung eines Innendrucks und/oder einer Temperatur der Heißdampfleitung (130) umfasst.

9. Kanalsanierungssystem (1), umfassend eine Vorrichtung (10) gemäß einem der vorhergehenden Ansprüche und einen in einem Behälterelement (110) der Vorrichtung (10) aufnehmbaren Schlauchliner (20), wobei ein erster Endbereich (22) des Schlauchliners (20) mittels eines Auslassbefestigungselements (24) an einem Befestigungsbereich (122) des Stutzens (120) befestigbar ist.

10. Kanalsanierungssystem (1) gemäß Anspruch 9, wobei der Schlauchliner (20) eine innenliegende Linerschicht (220) und eine außenliegende Stützschicht (210) aufweist, wobei der Schlauchliner (20) in zumindest einem Teil des ersten Endbereichs (22) linerschichtfrei ausgebildet ist, und wobei vorzugsweise nur die Stützschicht (210) mittels des Auslassbefestigungselements (24) an der Vorrichtung (10) befestigt ist.

11. Kanalsanierungssystem (1) gemäß Anspruch 10, ferner umfassend eine Schlauchmanschette (230) zur Ummantelung und Fixierung der Stützschicht (210) in einem an den ersten Endbereich (22) angrenzenden Bereich des Schlauchliners (20).

12. Kanalsanierungssystem (1) gemäß Anspruch 11, wobei die Schlauchmanschette (230) zum Brechen bei einem vorgegebenen von dem Schlauchliner (20) auf die Schlauchmanschette (230) ausgeübten Druck und/oder zum Ausdehnen bei einer bei einer Erwärmung von mehr als 40°C ausgebildet ist.

13. Verwendung einer Vorrichtung (10) gemäß einem der Ansprüche 1 bis 8 oder eines Kanalsanierungssystems (1) gemäß einem der Ansprüche 9 bis 12 zur Sanierung, von einem Hauptkanal (2) aus, zumindest eines Teils eines von dem Hauptkanal (2) abgehenden Nebenkanals (3).

14. Verfahren (200) zum Applizieren eines Schlauchliners (20) in einen Nebenkanal (3), umfassend:
- Aufnehmen (101) eines Schlauchliners (20) in ein Behälterelement (110) einer Behälteranordnung (100), die sich entlang einer axialen (x) und einer senkrecht zur axialen Richtung (x) verlaufenden Querrichtung (r) erstreckt;
- Befestigen (102) eines ersten Endbereichs (22) des Schlauchliners (20) an einem Stutzen (120) der Behälteranordnung (100), der an einem axialen Ende des Behälterelements (110) angeordnet ist, und der eine in Querrichtung (r) weisende Auslassöffnung (124) zur Ausgabe des Schlauchliners (20) aus der Behälteranordnung (100) aufweist, wobei der erste Endbereich (22) durch die Auslassöffnung (124) geführt und über die Umwandung der Auslassöffnung (124) gestülpt wird und eine Schlauchmanschette (230) zur Ummantelung und Fixierung einer Stützschicht (210) des Schlauchliners (20) in einem an den ersten Endbereich (22) angrenzenden Bereich vorgesehen ist;
- Positionieren und Ausrichten (103) der Behälteranordnung (100) in einem Hauptkanal (2), von dem der Nebenkanal (3) abgeht, zur Ausgabe des Schlauchliners (20) aus der Auslassöffnung (124) in den Nebenkanal (3);
- Ausgeben (104) des Schlauchliners (20) aus der Auslassöffnung (124) in den Nebenkanal (3); und
- Aushärten (105) des ausgegebenen Schlauchliners (20), vorzugsweise durch Beaufschlagen der Behälteranordnung (100) mit Heißdampf.

15. Schlauchmanschette (230) zur Verwendung in einem Kanalsanierungssystem (1) gemäß einem der Ansprüche 9 bis 12.
